Europäisches Patentamt

European Patent Office

Office européen des brevets

(11) Publication number: **0 204 090 B1**

## EUROPEAN PATENT SPECIFICATION

(45) Date of publication of patent specification: **20.03.91**

(51) Int. Cl.5 **G01N 21/31**

(21) Application number: **86104155.6**

(22) Date of filing: **26.03.86**

(54) Spectrophotometer.

(30) Priority: **28.03.85 JP 64593/85**

(43) Date of publication of application:
**10.12.86 Bulletin 86/50**

(45) Publication of the grant of the patent:
**20.03.91 Bulletin 91/12**

(84) Designated Contracting States:
**DE GB**

(56) References cited:
**DE-A- 2 902 776**
**US-A- 3 327 583**

**SOVIET INVENTIONS ILLUSTRATED, vol. J5511, week B40, 14th November 1979, abstract no. R14 R16, Derwent Publications Ltd., London, GB & SU-A-641 334**

**PATENT ABSTRACTS OF JAPAN, vol. 8, no. 117 (P-277)[1554], 31st May 1984 & JP-A-59-24222**

**APPLIED OPTICS, vol. 19, no. 8, April 1980, pages 1268-1273, New York, US; V.R. WEIDNER et al.: "NBS specular reflectometer-spectrophotometer"**

(73) Proprietor: **SHIMADZU CORPORATION**
**378, Ichinofunairi-cho Kawaramachi-dori Nijo Sagaru**
**Nakagyo-ku Kyoto 604(JP)**

(72) Inventor: **Akiyama, Osamu**
**6-20, Umezu Goto-cho Ukyo-ku**
**Kyoto(JP)**

(74) Representative: **Grupe, Peter, Dipl.-Ing. et al Patentanwaltsbüro Tiedtke-Bühling-Kinne-Grupe-Pellmann-Grams-Struif Bavariaring 4**
**W-8000 München 2(DE)**

APPLIED OPTICS, vol. 23, no. 22, November 1984, pages 4054-4057, New York, US; A. BITTAR et al.: "High-accuracy true normal-incidence absolute reflectometer"

NBS STAFF REPORT, September 1980, Washington, US; J.J. HSIA et al.: "Reflectance properties of pressed tetrafluoroethylene powder"

OPTIK, vol. 54, no. 5, January 1980, pages 397-408, Stuttgart; G. GEUTLER et al.: "Über eine Anordnung zur genauen Messung von Reflexionsgrad und Transmissionsgrad"

## Description

BACKGROUND OF THE INVENTION

The invention relates to a spectrophotometer according to the preamble of claim 1.

A spectrophotometer of this type is described in Applied Optics, Vol. 23, No. 22, November 15, 1984, pp. 4054 - 4057 in A. Bittar et al.: "High-accuracy true normal-incidence absolute reflectometer".

In this known spectrophotometer the position of the photodetector is fixed relative to the sample compartment, which has a rather narrow, limited space in which a sample must be set at a fixed position for measurement, so that only a sample of a definite size and shape can be measured.

There is known a spectrophotometer having a sample compartment so designed that the photodetector is movable along a circle with a sample set at the center thereof for goniophotometric measurement of the light reflected specularly or scattered by the sample. In the arrangement, the relative positions between the sample and the photodetector or between the light source and the monochromator are specified and cannot be adjusted for measurement of samples in general.

If a given large-sized sample is to be analyzed with any of the above-mentioned conventional types of spectrophotometers, the monochromatic light from the monochromator would have to be taken out into a free large space, in which several mirrors would have to be so arranged as to direct the light transmitted through or reflected by the sample onto the photodetector. This arrangement requires substantial modification of the design of the existing sample compartment at a considerable cost.

With recent advancement of technology it has become necessary to conduct spectrophotometric analysis on not only those samples which are specifically prepared for the measurement but also various devices and instruments themselves as they have been assembled, and there is an increasing demand for a spectrophotometer which has a sufficient degree of freedom to accommodate both large- and small-sized samples.

Accordingly, the object of the invention is to provide a spectrophotometer which is capable of measuring given samples of various sizes and shapes with as small a number of optical elements or members as possible to form the optical path of the instrument.

This object is achieved according to the invention by the features defined in claim 1.

Thereby the invention provides a spectrophotometer suitable for measuring the optical characteristics of samples of various shapes, such as for example a sample in a container of a typical square shape, a silicon wafer, a sample in a container kept at a temperature different from room temperature, an optical lens, a sample of an indefinite large shape over the ultraviolet, visible and infrared wavelenght ranges using various measuring methods.

The invention will be described with reference to the accompanying drawings.

BRIEF EXPLANATION OF THE DRAWING

Fig. 1 is a schematic top plan view of one embodiment of the invention;

Fig. 2 is a perspective view of a magnetic holder for holding a sample holder;

Fig. 3 is a schematic top plan view of the spectrophotometer of Fig. 1 in which the detector is arranged relative to a sample for measurement of the light scattered by the sample;

Fig. 4 is a schematic top plan view of a con-ventional spectrophotometer arranged for measure-ment of the light scattered by a sample;

Fig. 5 is a schematic top plan view of the spectrophotometer of Fig. 1 arranged for measurement of the light reflected by the surface of a mirror;

Fig. 6 is a schematic top plan vied of a con-ventional spectrophotometer arranged for measure-ment of the light reflected by the surface of a mirror;

Fig. 7 is a schematic top plan view of the spectrophotometer of Fig. 1 arranged for measurement of the absorbance of a gaseous sample;

Fig. 8 is a schematic top plan view of a con-ventional spectrophotometer arranged for measure-ment of the absorbance of a gaseous sample;

Fig. 9 is a schematic top plan view of the spectrophotometer of Fig. 1 arranged for measurement of the transmittance of a thick piece of glass;

Fig. 10 is a top plan view of the spectrophotometer of Fig. 1 arranged for goniophotometric measurement of the transmittance of a light scattering sample;

Fig. 11 is a schematic elevational view of the spectrophotometer of Fig. 1 arranged for measurement of a sample obtained by thin layer chromatography; and

Fig. 12 is a schematic top plan view of a spectrophotometer in which the sample compartment has a plane floor formed with grooves for setting the detector and the sample at selected positions.

SUMMARY OF THE INVENTION

Briefly stated, in accordance with the invention the sample compartment is composed of a simple space without any fixed internal members such as for example guide members for samples and optical elements and stoppers for positioning them. The detector comprises an integrating sphere and a photoelectric element for detecting the light therefrom, and can be set at a desired position and in a desired direction inside the sample compartment.

With an integrating sphere used in the detector, even if the diameter of the flux of light entering the integrating sphere varies, or if the position and/or direction of the flux of light is displaced more or less, the result of measurement will not be affected materially. If the light impinged directly onto a photoelctric element the sensitivity of which varies locally on different parts of its sensitive surface, variation of the diameter of the flux of light to be measured and/or displacement of the incident point thereof on the photosensitive surface of the photoelectric element would cause local difference in sensitivity of the photosensitive surface of the element to adversely influence the result of measurement. Such variation and/or displacement, however, are completely offset by repeated reflection of the light within the integrating sphere.

If a sample had substantially parallel surfaces onto one of which the light from the monochromator was projected perpendicularly, the light transmitted through the sample would not be displaced or the diameter of the light beam would not change. A given sample, however, generally has no such parallel surfaces, so that the flux of light from the sample will necessarily be dispersed, converged, deflected or displaced. If the flux of light impinged directly onto a photodetector, the result of measurement would vary even with the same samples if they were set at slightly different positions, with resulting deterioration of reproducibility of measurement. According to the invention, since the sample compartment is empty and contains no fixed structural members, and the photodetector can be set at a desired position and to face in a desired direction, it is possible to arrange the photodetector and a sample at the most suitable relative positions for measurement with the least number of accessory optical elements such as mirrors in accordance with the shape of the sample. Since an integrating sphere is used in the detector, a good reproducibility of measurement can be attained without employing any members such as stoppers for defining the positions of the sample and the photodetector.

## PREFERRED EMBODIMENTS OF THE INVENTION

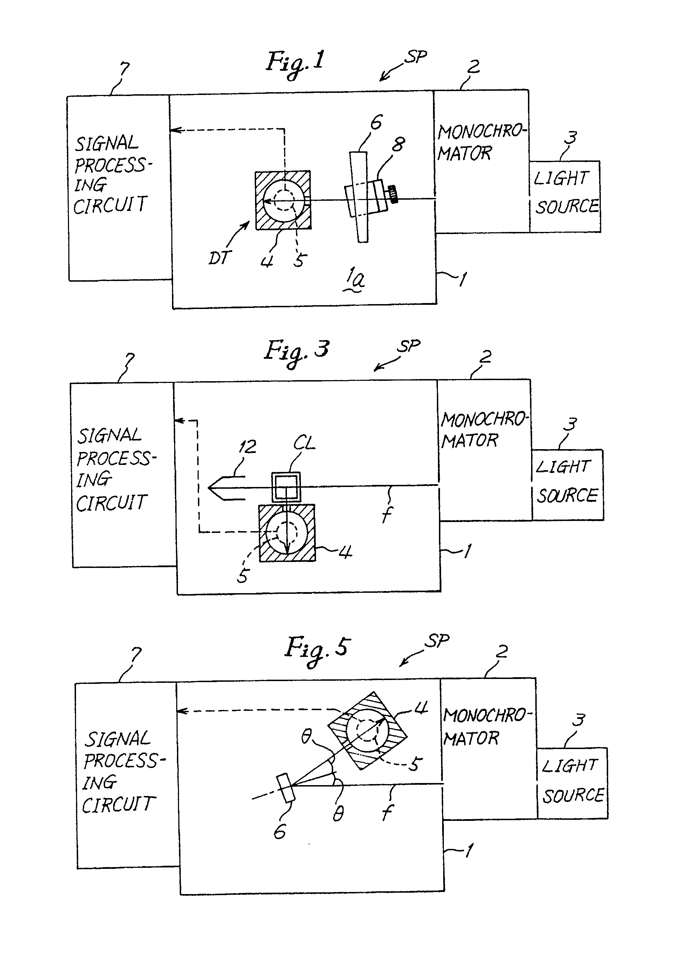

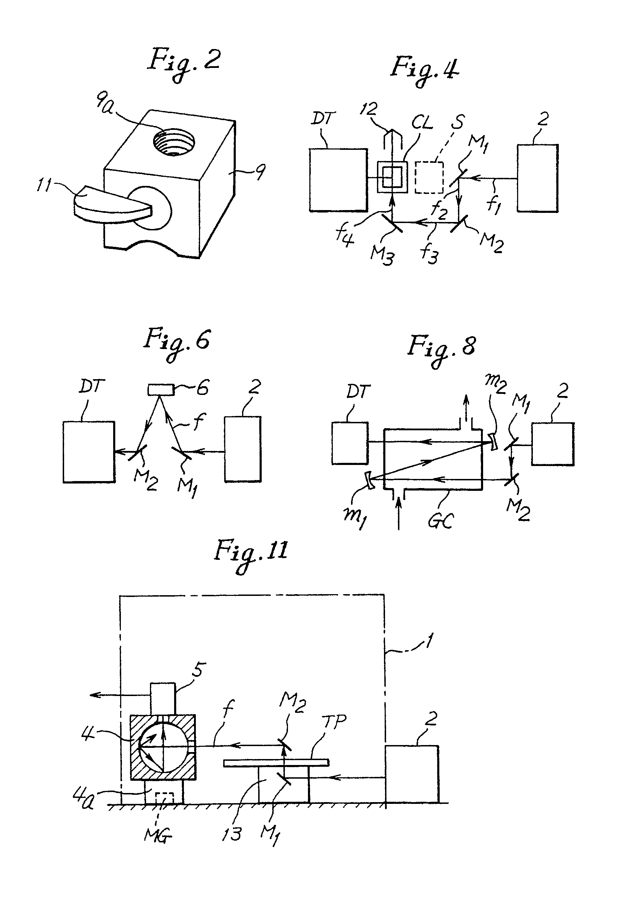

Referring to the drawings, first to Fig. 1, there is schematically shown a spectrophotometer SP which comprises a sample compartment 1, a monochromator 2, and a light source 3. A detector DT and a sample 6 to be measured are arranged in the sample compartment 1. The detector DT comprises an integrating sphere 4 shown in transverse section and a photodetector 5 shown as a broken line circle. The sample 6 is supported by a sample holder 8 arranged in the compartment 1 for measurement of the transmittance of the sample. The output from the photodetector 5 is applied to a signal processing circuit 7 schematically shown as a simple block.

In accordance with the invention the integrating sphere 4 and the sample holder 8 are not permanently fixed at their respective positions but temporarily arranged for a specfic measurement and are freely movable to any desired positions inside the sample compartment 1.

There are various methods of having the detector DT and the sample holder 8 movable to their respective selected positions in the sample compartment. For example, the floor 1a of the compartment is made of a magnetic material such as iron, and the integrating sphere 4 has a base 4a which may be provided in the bottom thereof with a magnet MG as schematically shown in Fig. 11. Also, the sample holder 8 may be mounted on a commercially available magnet stand 9 shown in Fig. 2 and provided in its top face with a threaded bore 9a into which the sample holder 8 is fixed. The magnet stand is also provided on its bottom with a magnet, not shown, whose attractive force can be controlled by a lever 11 mounted on a lateral side of the stand.

By turning the lever 11 in one direction it is possible to cause the magnet to operate thereby to fixedly position the stand 9 and the sample holder 8 thereon on the iron floor 1a of the sample compartment. The attractive force of the magnet may be in the order of 30 kg (1kg = 10N) which is sufficient to stably hold a sample of a considerable weight. By turning the lever in the opposite direction it is possible to shunt the magnetic force of the magnet thereby to enable removal of the stand from on the floor of the compartment. When the detector DT and the sample holder 8 with the sample thereon have been removed from inside the sample compartment, the compartment becomes an empty space.

In addition to the detector DT comprising the integrating sphere 4 and the photodetector 5 and the sample holder 8 including the magnet stand 9, there are provided several other accessories such as plane mirrors. concave mirrors, a light trap, etc. each having a magnetic device for temporarily fixing the accessory at a desired position on the floor of the sample chamber. In the following examples these accessories are selectively used. In Figs. 3 through 12 the same reference symbols as in Figs. 1 and 2 designate corresponding component parts or members.

Fig. 3 shows an arrangement for measuring the light scattered by a liquid sample. Inside the sample compartment 1, a light trap 12 is placed on the optical axis f of the monochromatic light emerging from the monochromator 2 at a suitable distance therefrom. On the optical axis f in front of the trap 12 there is placed a sample cell CL having four polished side windows, and an integrating sphere 4 is placed adjacent the lateral side of the cell.

An arrangement for measuring scattered light from a sample in a known typical spectrophotometer is shown for comparison in Fig. 4, wherein a detector DT is fixed in the sample compartment, and a sample cell is arranged at position S for measurement of the transmittance or absorbance of a sample in the cell. For measurement of the light scattered by the sample three plane mirrors M1, M2 and M3 are arranged so that the optical path is bent at right angles by each of the three mirrors. Thus, the optical path is composed of a first portion f1 extending from the monochromator 2 to the plane mirror M1, a second portion f2 extending between the mirrors M1 and M2 perpendicularly to the first portion f1, a third portion f3 extending between the mirrors M2 and M3 perpendicularly to the second portion f2 and in parallel with the first portion f1, and a fourth portion f4 extending between the mirror M3 and the light trap 12 perpendicularly to the third portion f3 and in parallel with the second portion f2 and crossing the straight optical path along which the light from the monochromator 2 would advance to the detector without the mirrors M1 - M3.

A sample cell CL is positioned in front of the detector DT and in the fourth portion f4 of the optical path, so that the light scattered by the sample in the cell CL enters the detector DT, with the light transmitted through the sample being caught by the trap 12. Since the position of the detector DT is fixed in the conventional instrument, the optical path must be bent by the mirrors M1 - M3 to suit to a particular type of measurement. The arrangement of the invention, however, does not require such additional mirrors or any other optical elements, with resulting simplification of the optical path.

An arrangement for measuring the reflectance of a mirror is shown schematically in Fig. 5. In the sample chamber, a sample plane mirror 6 is set so as to make an angle $\theta$ with the optical axis f of the light from the monochromator 2, with an integrating sphere 4 being arranged so as to face the reflective surface of the sample and make an angle of $2\theta$

with the optical axis f , so that the light reflected by the mirror surface enters the integrating sphere 4. A conventional spectrophotometer requires two plane mirrors M1 and M2 for the same purpose as shown in Fig. 6.

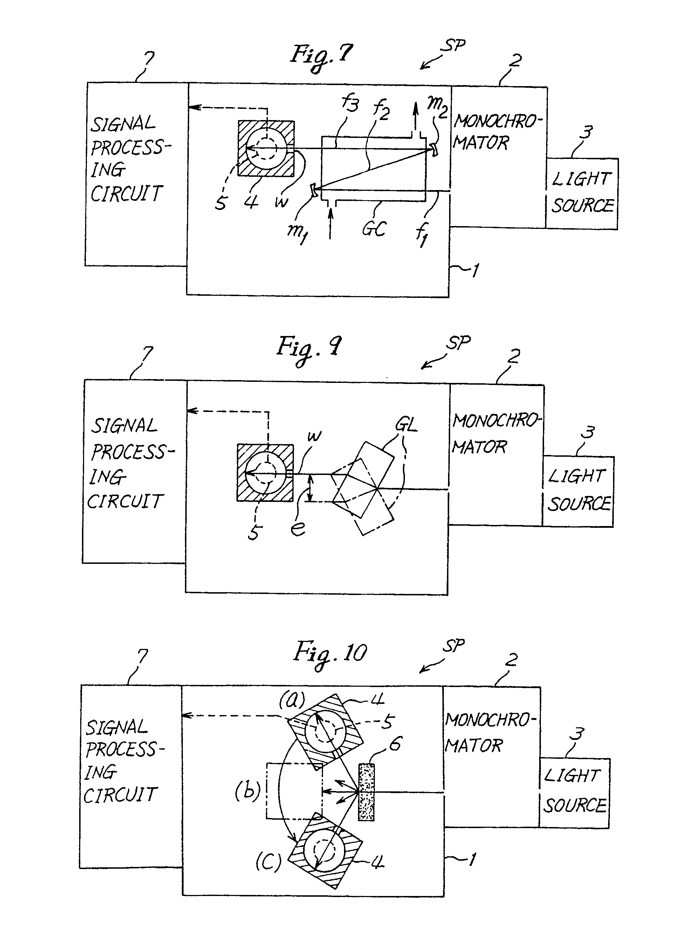

Fig. 7 schematically shows an arrangement for measuring the absorbance of a gaseous sample. A gas to be measured is passed through an elongated gas cell GC placed in the sample compartment 1 with a pair of concave mirrors m1 and m2 provided adjacent the opposite ends of the cell GC so as to cause the flux of light from the monochromator to repeatedly pass through the sample cell three times, with resulting elongation of the optical path available for absorption of the light by the gas. The optical path consists of a first portion f1 between the monochromator 2 and the first concave mirror m1, a second portion f2 between the first and second concave mirrors m1 and m2, and a third portion f3 between the second concave mirror m2 and the integrating sphere 4. The first and third portions f1 and f3 are displaced in parallel, with the second portion f2 extending aslant between the two concave mirrors m1 and m2. The displacement, however, is compensated by simply adjusting the position of the integrating sphere 4 to align its inlet window w with the third portion f3 of the optical path without using any additional mirrors.

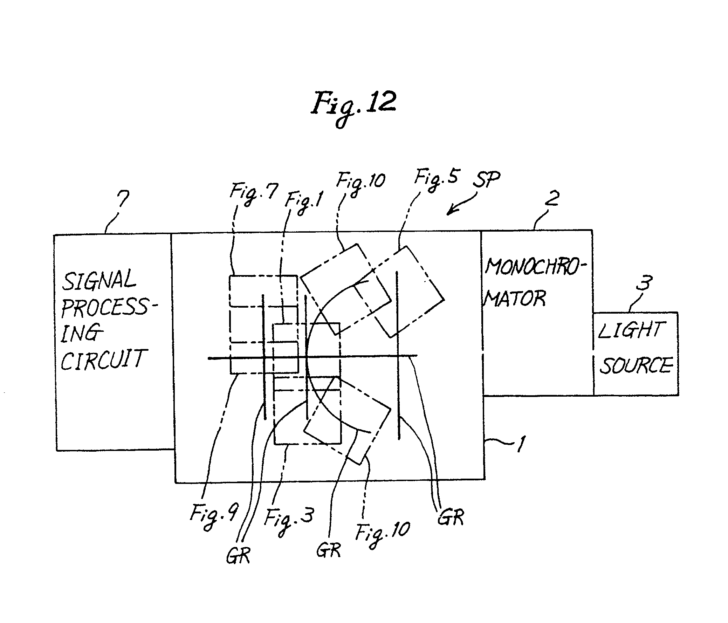

A conventional spectrophotometer in which the position of the detector DT cannot be changed requires two plane mirrors M1 and M2 arranged as shown in Fig. 8 to compensate the above-mentioned displacement of the optical path.

Fig. 9 shows an arrangement for measuring the transmittance of a thick piece of glass GL. The light transmitted through the sample GL in a solid line position follows a path displaced in parallel a distance e from the path it would follow if the sample GL was in a broken line position. Since the position of the integrating sphere 4 can be changed, the sphere can have a smaller inlet window w than if it was fixed. In particular, the inlet window can be of a diameter a little larger than that of the section of the flux of light, so that the amount of light lost due to leakage from the integrating sphere through the inlet window is reduced thereby to improve the sensitivity of the detector.

It is also possible to cause the light beam entering the integrating sphere to be incident on substantially the same point on the inner surface thereof when a sample is being measured as when 100 % transmittance is being measured without a sample. Let the sample glass block have a thickness of 50 mm and an index of refraction of 1.53, and the incident angle $\theta$ of the light on the block be 30°. The above-mentioned distance e of displacement will be no smaller than about 20 mm. The integrating sphere 4 is originally designed to avoid influence on the result of measurement by variation of the position of the light incident on the inner surface of the sphere. Since the integrating sphere has not completely uniform reflectivity all over the inner surface thereof, it is preferred to have the incident position of light thereon substantially unchanged.

Fig. 10 shows an arrangement for goniophotometric measurement of the light transmitted through a light scattering sample 6. The position of the integrating sphere 4 may be changed as shown at (a), (b) and (c) to measure the light transmitted through the sample 6 at different angles.

Fig. 11 shows an arrangement for measuring the light transmitted through a sample developed on a plate TP by thin layer chromatography. The plate TP is held in a horizontal position so as to be movable horizontally, with a pair of plane mirrors M2 and M1 arranged above and below the plate TP, respectively, so that the light from the monochromator is transmitted through the plate PT. The base 4a is of a height sufficient to support the integrating sphere 4 at such a position as to enable the light transmitted through the sample on the plate PT and reflected by the mirror M2 to enter the integrating sphere. The arrangement is particularly suitable for a plate such as a slub gel plate which cannot be held vertically. Although the arrangement of Fig. 1 requires a jig schemattically shown at 13 for supporting the mirrors M1 and M2 and the plate TP, it is not necessary to modify or reconstruct the instrument or provide bulky complicated accessories.

As shown in Fig. 12, the compartment floor may be formed with guide grooves or mortises GR so that either or both of the detector and the sample holder having a projection or tenon (not shown) on the bottom thereof slidably engaged in the grooves can be moved therealong to required positions as shown in phantom so as to be temporarily fixed there by suitable means not shown. The other optical accessories may also be provided with a similar tenon for dovetail joint with the mortises in the floor of the compartment.

Instead of the grooves, the sample compartment may be provided on the floor thereof with suitable marks to indicate the positions at which the intergrating sphere, the detector and the accessories are to be set.

As described above in detail, the spectrophotometer of the invention includes no fixed component parts or structural members in the sample compartment. The optical elements and other members necessary for measurement can be set freely at selected positions, so that the instrument can be used as if it was designed for exclusive use for a specific type of measurement. Without employing any complicated expensive accessories the spectrophotometer of the invention is capable of conducting various kinds of measurement on given samples of various sizes and shapes at a low cost.

**Claims**

1. Spectrophotometer comprising: means (2, 3) for producing a monochromatic light beam; a sample holder (8) for holding a sample (6) to be measured so that said beam is incident on said sample; a detector (DT) having an integrating sphere (4) for receiving the light from said sample and photoelectric means (5) for receiving the light from said integrating sphere to produce a corresponding electrical signal: and a sample compartment (1) characterized in that the spectrophotometer is adopted to perform various kinds of measurements on given samples of various sizes and shapes in that said sample holder and detector respectively comprise fastening means (9,MG) to enable them to be arranged on the floor of said sample compartment at respective freely selected positions corresponding to respective specific measurements and to be easily removed from said positions.

2. Spectrophotometer according to claim 1, characterized in that said sample compartment (1) is provided with a plane floor made of a magnetic material, and in that said fastening means (9, MG) are magnetic attracting means provided at the bottom of said sample holder (8) and said detector (DT).

3. Spectrophotometer according to claim 1, characterized in that said sample compartment (1) is provided with a plane floor, and in that said fastening means are sucking means provided at the bottom of said sample holder (8) and said detector (DT).

4. Spectrophotometer according to one of the claims 1 to 3, characterized by optical accessory means (12, M1 to M3) provided at the bottom thereof with same fastening means (9; MG) as said sample holder (8) and said detector (DT).

5. Spectrophotometer according to one of the claims 1 to 4, characterized in that grooves (GR) are formed in the floor of said sample compartment (1) so as to extend in a predetermined pattern and in that a projection may be attached on the bottom of said sample holder (8), said detector (DT) and/or any optical accessory means (12, M1 to M3) so as to be slidably engaged in said grooves along which said sample holder, said detector and/or said optical accessory means may be fastened by said fastening means (9, MG) reproducibly at selected positions.

6. Spectrophotometer according to one of the claims 1 to 5, characterized in that marks are drawn on the plane floor of said sample compartment (1) so as to indicate certain preselected positions for the fastening by said fastening means (9, MG).

**Revendications**

1. Spectrophotomètre comprenant : des moyens (2,3) pour produire un faisceau de lumière monochromatique; un support d'échantillon (8) pour maintenir un échantillon (6) à mesurer de façon que ledit faisceau soit incident sur ledit échantillon; un détecteur (DT) comprenant une sphère d'intégration (4) pour recevoir la lumière provenant dudit échantillon et des moyens photoélectriques (5) pour recevoir la lumière provenant de ladite sphère d'intégration pour produire un signal électrique correspondant; et un compartiment à échantillon (1), caractérisé en ce que le spectrophotomètre est adapté pour effectuer divers types de mesures sur des échantillons donnés de différentes tailles et formes, lesdits support d'échantillon et détecteur comprenant respectivement : des moyens de fixation (9, MG) pour leur permettre d'être disposés sur le sol dudit compartiment à échantillon, en des positions respectives sélectionnées librement, correspondant à des mesures spécifiques respectives, et pour être facilement enlevés desdites positions.

2. Spectrophotomètre selon la revendication 1, caractérisé en ce que ledit compartiment à échantillon (1) est prévu avec un sol plan constitué d'un matériau magnétique et que lesdits moyens de fixation (9,MG) sont des moyens à attraction magnétique prévus sur le fond dudit support d'échantillon (8) et dudit détecteur (DT).

3. Spectrophotomètre selon la revendication 1, caractérisé en ce que ledit compartiment à échantillon (1) est prévu avec un sol plan et en ce que lesdits moyens de fixation sont des moyens à succion prévus au fond dudit support d'échantillon (8) et dudit détecteur (DT).

4. Spectrophotomètre selon l'une des revendications 1 à 3, caractérisé par des moyens accessoires optiques (12. M1 à M3) prévus au fond de celui-ci, avec les mêmes moyens de fixation (9;MG) que pour ledit support d'échantillon (8) et le dit détecteur (DT).

5. Spectrophotomètre selon l'une des revendications 1 à 4, caractérisé en ce que des rainures (GR) sont formées sur le sol dudit compartiment à échantillon (1) de façon à s'étendre selon un modèle déterminé et en ce qu'une saillie peut être fixée sur le fond dudit support d'échantillon (8), dudit détecteur (DT) et/ou d'un quelconque moyen accessoire optique (12, M1 à M3) de façon à être engagée coulissante dans lesdites rainures le long desquelles ledit support d'échantillon, ledit détecteur et/ou lesdits moyens accessoires optiques peuvent être fixés grâce auxdits moyens de fixation (9,MG) de façon reproductible, en des positions sélectionnées.

6. Spectrophotomètre selon l'une des revendications 1 à 5, caractérisé en ce que des marques sont tracées sur le sol plan de chaque compartiment à échantillon (1), de façon à indiquer certaines positions présélectionnées pour la fixation grâce auxdits moyens de fixation (9,MG).

**Ansprüche**

1. Spektralfotometer, das eine Vorrichtung (2, 3) zum Erzeugen eines monochromatischen Lichtstrahls, einen Probenhalter (8) zum Halten einer zu messenden Probe (6) derart, daß der Strahl auf die Probe fällt, einen Detektor (DT) mit einer integrierenden Kugel (4) zum Aufnehmen des Lichts von der Probe und mit einer fotoelektrischen Vorrichtung (5) zum Aufnehmen des Lichts von der integrierenden Kugel für das Erzeugen des entsprechenden elektrischen Signals und eine Probenkammer (1) enthält, dadurch gekennzeichnet, daß das Spektralfotometer zum Ausführen von verschiedenartigen Messungen an gegebenen Proben mit verschiedenerlei Größen und Formen dadurch ausgelegt ist, daß der Probenhalter und der Detektor jeweils eine Befestigungsvorrichtung (9, MG) aufweisen, die deren Anordnung auf dem Boden der Probenkammer an jeweils frei gewählten Stellen entsprechend den jeweiligen bestimmten Messungen und deren leichtes Entfernen von diesen Stellen ermöglicht.

2. Spektralfotometer nach Anspruch 1, dadurch gekennzeichnet, daß die Probenkammer (1) mit einem ebenen Boden aus magnetischem Material versehen ist und daß die Befestigungsvorrichtungen (9, MG) magnetische Anzugsvorrichtungen sind, die am Unterteil des Probenhalters (8) und des Detektors (DT) angebracht sind.

3. Spektralfotometer nach Anspruch 1, dadurch gekennzeichnet, daß die Probenkammer (1) mit einem ebenen Boden versehen ist, und daß die Befestigungsvorrichtungen Saugvorrichtungen sind, die an dem Unterteil des Probenhalters (8) und des Detektors (DT) angebracht sind.

4. Spektralfotometer nach einem der Ansprüche 1 bis 3, gekennzeichnet durch optische Zusatzvorrichtungen (12, M1 - M3), die an ihrem Unterteil mit den gleichen Befestigungsvorrichtungen (9, MG) wie der Probenhalter (8) und der Detektor (DT) versehen sind.

5. Spektralfotometer nach einem der Ansprüche 1 bis 4, dadurch gekennzeichnet, daß in dem Boden der Probenkammer (1) Nuten (GR) ausgebildet sind, die sich in einem vorbestimmten Muster erstrecken, und daß an dem Unterteil des Probenhalters (8), des Detektors (DT) und/oder irgendeiner optischen Zusatzvorrichtung (12, M1- M3) ein Vorsprung anbringbar ist, der verschiebbar in die Nuten greift, entlang denen der Probenhalter, der Detektor und/oder die optische Zusatzvorrichtung mittels der Befestigungsvorrichtungen (9, MG) reproduzierbar an gewählten Stellen festgelegt werden können.

6. Spektralfotometer nach einem der Ansprüche 1 bis 5, dadurch gekennzeichnet, daß auf dem ebenen Boden der Probenkammer (1) Markierungen zum Anzeigen bestimmter vorgewählter Stellen für das Festlegen mittels der Befestigungsvorrichtungen (9, MG) gezeichnet sind.

Fig.1

Fig.3

Fig.5

## Fig. 2

## Fig. 4

## Fig. 6

## Fig. 8

## Fig. 11

## Fig. 7

SP

7 SIGNAL PROCESSING CIRCUIT

$f_3$ $f_2$ $m_2$

2 MONOCHROMATOR

3 LIGHT SOURCE

5 4 w

$m_1$ GC $f_1$

1

## Fig. 9

SP

7 SIGNAL PROCESSING CIRCUIT

w GL

2 MONOCHROMATOR

3 LIGHT SOURCE

5 e

## Fig. 10

SP

7 SIGNAL PROCESSING CIRCUIT

(a) 4

5

6

(b)

2 MONOCHROMATOR

3 LIGHT SOURCE

(C) 4

1

## Fig.12